# EUROPÄISCHE PATENTSCHRIFT

(11) **EP 2 245 346 B1**
(45) Veröffentlichungstag und Bekanntmachung des Hinweises auf die Patenterteilung: **15.08.2012**
(21) Anmeldenummer: 09703636.2
(22) Anmeldetag: 19.01.2009
(51) Int. Cl.: F16K 11/078, F16K 31/60

(54) **KARTUSCHE FÜR EINE SANITÄRARMATUR**
CARTRIDGE FOR A SANITARY FITTING
CARTOUCHE POUR UN APPAREIL SANITAIRE

(30) Priorität: 21.01.2008 DE 102008000108
(43) Veröffentlichungstag der Anmeldung: 03.11.2010
(73) Patentinhaber: CeramTec GmbH, 73207 Plochingen (DE)
(72) Erfinder: CHRIST, Frank, 54538 Bausendorf (DE)
(74) Vertreter: Uppena, Franz
(86) Internationale Anmeldenummer: PCT/EP2009/050548
(87) Internationale Veröffentlichungsnummer: WO 2009/092687

(56) Entgegenhaltungen:
- EP-A- 0 143 058
- DE-A1- 4 028 450
- DE-U1- 8 907 729
- DE-U1- 9 012 682

## Beschreibung

Die Erfindung betrifft eine Kartusche für eine Sanitärarmatur, wobei das Gehäuse der Kartusche, das von einer Bodenplatte verschlossen wird, umschließt: eine Ventilsitzscheibe mit Einlassöffnungen für Kalt- und Heißwasser und eine Ausströmöffnung, die in den Ausfluss der Sanitärarmatur mündet, eine zur Ventilsitzscheibe verschiebbar angeordnete Steuerscheibe, die eine Mischkammer enthält, die die Einlassöffnungen und die Ausströmöffnung der Ventilsitzscheibe in Verbindung bringt und in der die Mischung des heißen mit dem kalten Wasser erfolgt sowie eine Abdeckscheibe, die auf der der Ventilsitzscheibe abgewandten Seite der Steuerscheibe mit dieser verbunden ist und mit einem Stellhebel zum Verschieben der Scheiben in Wirkverbindung steht, wobei der Stellhebel in einer Buchse gelagert ist und mit dem Betätigungshebel der Armatur bewegt wird.

Eine derartige Kartusche ist beispielsweise aus DE-U-90 12 682 bekannt.

An eine Kartusche für eine Sanitärarmatur werden hohe Anforderungen gestellt. Sie soll über einen langen Zeitraum dicht bleiben. Sie soll sich leicht betätigen lassen und bei derselben Ventilstellung möglichst stets Wasser mit derselben Temperatur liefern. Sie soll sich rationell und kostengünstig herstellen lassen und die Anzahl der Verschleißteile soll möglichst gering sein.

Das mit am meisten beanspruchte Bauteil einer Kartusche ist der Stellhebel, mit dem die Steuerscheibe bewegt wird. Bei vertikaler Betätigung des mit dem Stellhebel verbundenen Betätigungshebels werden die Zuflüsse geöffnet oder geschlossen, beim Schwenken in horizontaler Richtung werden der Heiß- und der Kaltwasserstrom miteinander gemischt. Dadurch wird der Stellhebel auf Biegung und Torsion beansprucht. In der Regel sind die Stellhebel für die vertikale Schwenkbewegung auf einer mechanischen Achse gelagert, die in einer Buchse gelagert ist, die wiederum im Gehäuse in einer horizontalen Ebene um eine senkrechte Achse schwenkbar ist. Die Buchse ist im Kartuschengehäuse gelagert, wie es beispielsweise aus der DE 2356211 C2 bekannt ist. Statt um eine Achse schwenkbar können die Stellhebel auch mittels einer Kugel schwenkbar gelagert sein, wie es beispielsweise aus der DE-OS 2923074 bekannt ist. Die Kugel ist in einer feststehenden Buchse gelagert und der Stellhebel lässt sich auf Grund der Lagerung mit einer Kugel beliebig in alle Richtungen bewegen.

Von diesen bekannten Lagerungen ist die Lagerung mittels einer Kugel am aufwendigsten, weil zum Umschließen der Kugel die sie lagernde Buchse geteilt werden muss und die Herstellung einer Kugel eine präzise Bearbeitung erfordert. Bei der Lagerung mittels einer Achse wird diese, insbesondere bei übermäßigem Kraftaufwand bei der Betätigung, auf Biegung beansprucht. Außerdem können korrosive Ablagerungen die Lager der Achse beeinträchtigen.

Es ist deshalb die Aufgabe der Erfindung, eine konstruktiv einfache Lagerung eines Stellhebels mit möglichst wenigen verschleißanfälligen Bauteilen vorzustellen.

Die Lösung der Aufgabe erfolgt mit Hilfe der Merkmale des Unabhäugigen Anspruchs. Weitere vorteilhafte Ausgestaltungen der Erfindung werden in den abhängigen Ansprüchen beansprucht.

Der Stellhebel ist einteilig und die Lagerung erfolgt ohne mechanische Schwenkachse in einer Buchse im Gehäuse. Der Stellhebel setzt sich zusammen aus einem Hebelarm, an dem wiederum der Betätigungshebel der Armatur befestigt ist, einem zylinderförmigen Schwenklager und dem daran angeformten Mitnehmerzapfen, der in eine Nut der Abdeckscheibe reicht zur Betätigung der mit ihr verbundenen Steuerscheibe.

Der Stellhebel ist so geformt, dass er sich leicht mit dem Hebelarm für den Betätigungshebel voran in die ihn umschließende Buchse einschieben lässt und dort in einer der Zylinderform des Schwenklagers angepassten Ausnehmung der Buchse ohne mechanische Schwenkachse gelagert wird. Der Zusammenbau von Stellhebel und Buchse erfolgt in einem einzigen Arbeitsschritt durch Einschieben des Stellhebels in die Buchse.

Das zylinderförmige Schwenklager ist erfindungsgemäß in zwei Scheiben aufgeteilt. Beiderseits des Mitnehmerzapfens zur Betätigung der Steuerscheibe verläuft zwischen den beiden Scheiben eine Nut, in die jeweils Stege der Buchse eingreifen. Durch diese Stege kann die Schwenkbewegung des Stellhebels so eingestellt werden, dass in den beiden Endstellungen die maximale Öffnung bzw. optimale Abdichtung der jeweiligen Öffnungen durch die Steuerscheibe in der Kartusche erreicht werden. Durch die Stege in den Nuten wird die Buchse bei der horizontalen Schwenkbewegung des Stellhebels zur Mischung des Heiß- und des Kaltwasserstroms mitgenommen. Durch das Aufbringen der für die horizontale Schwenkbewegung erforderlichen Kraft auf die Stege wird das für die vertikale Schwenkbewegung vorgesehene zylinderförmige Schwenklager durch die Kraft für die horizontale Schwenkbewegung nicht belastet.

Kartuschen sollten für mindestens 100000 Betätigungen ohne Verschleißerscheinungen, insbesondere Undichtigkeiten, ausgelegt sein. Bei hochwertigen Armaturen wird eine Auslegung auf 500000 Betätigungen angestrebt. Der Stellhebel ist auf Grund seiner Lagerung dabei das mit am meisten beanspruchte Bauteil, insbesondere auf Biegung. Aus diesem Grund ist die Wahl der Werkstoffe des Stellhebels und der Buchse als Lager besonders wichtig. Der Stellhebel ist vorteilhaft ein Spritzgussteil aus Polyamid, das zusätzlich durch hochfeste Fasern, beispielsweise Glasfasern, verstärkt sein kann. Für die Buchse als Gleitpartner und Lager für den Stellhebel ist Polyoxymethylen (POM) empfehlenswert. Eine Werkstoffpaarung aus POM und Teflon in einem Lager ist ebenfalls denkbar.

Um die Reibung zwischen dem Stellhebel und der Buchse als Lager herabzusetzen, ist eine Schmierung mit geeignetem Fett vorgesehen, vorteilhaft Kunststofffett, beispielsweise einem Silikonfett mit Teflonpartikeln. Die Speicherung des Fetts erfolgt in Fettkammern, die auf den Lagerflächen vorgesehen sind, dort, wo sich gegeneinander bewegende Berührungsflächen des Stellhebels und der Buchse befinden. Die Fettkammern sind in der Regel nur auf einer der Lagerflächen vorgesehen, entweder auf den Lagerflächen der Buchse oder auf den Lagerflächen des Stellhebels. Die Fettkammern bestehen aus kleinen Vertiefungen, die auf der Lagerfläche angeordnet sind und in denen das Fett gespeichert ist. Es ist eine solche Verteilung der Fettkammern auf einer Fläche vorzusehen, dass eine gleichmäßige Versorgung mit dem Schmiermittel sichergestellt ist. Die Größe, die Form und die Anzahl der Fettkammern richten sich nach der Größe der Lagerfläche, nach ihrer Länge und nach ihrer Breite. Die Fettkammern können von 1 mm bis wenige 10tel mm tief sein und bei einem angepassten Querschnitt Breiten und Längen von jeweils etwa 1 mm bis 3 mm haben. Auch Fettkammern mit kreisförmigem Querschnitt mit bis zu 3 mm Durchmesser sind möglich.

Die Buchse mit dem in ihr gelagerten Stellhebel kann sich mit einer konisch geformten Fläche auf einer ebenfalls konisch geformten Fläche der Stirnwand des zylindrisch geformten Gehäuses abstützen. Diese Fläche dient als Lagerfläche der Buchse bei der Betätigung der Steuerscheibe für die Mischung des Heiß- und Kaltwasserstroms. Damit entfällt die ansonsten horizontale und gegebenenfalls zusätzliche vertikale Lagerfläche in der Gehäusestirnwand. Insbesondere zwei Lagerflächen führen zu erhöhten Reibungswiderständen. Bei den gleichzeitigen Schwenk- und Kippbewegungen des Stellhebels ist die Krafteinleitung in das Gehäuse wesentlich günstiger als bei einer herkömmlichen Lagerung der Buchse. Auch auf diesen Lagerflächen können Fettkammern zur Herabsetzung der Reibung zwischen Buchse und Gehäuse vorgesehen sein.

An Hand eines Ausführungsbeispiels wird die Erfindung näher erläutert. Es zeigen:
- Figur 1: eine Aufsicht auf die Kartusche mit eingezeichneten Schnittverläufen, in symmetrischer Schließstellung,
- Figur 2: eine Ansicht der Kartusche entsprechend dem Schnittverlauf A - A in symmetrischer Mischstellung, geöffnet,
- Figur 3: eine Ansicht der Kartusche entsprechend dem Schnittverlauf B - B in symmetrischer Schließstellung,
- Figur 4: eine Ansicht der Kartusche entsprechend dem Schnittverlauf C -C in symmetrischer Schließstellung,
- Figur 5: eine Ansicht des Stellhebels mit Blick auf seine Rückseite,
- Figur 6: eine Seitenansicht des Stellhebels und
- Figur 7: eine Ansicht des Stellhebels mit Blick auf seine Vorderseite.

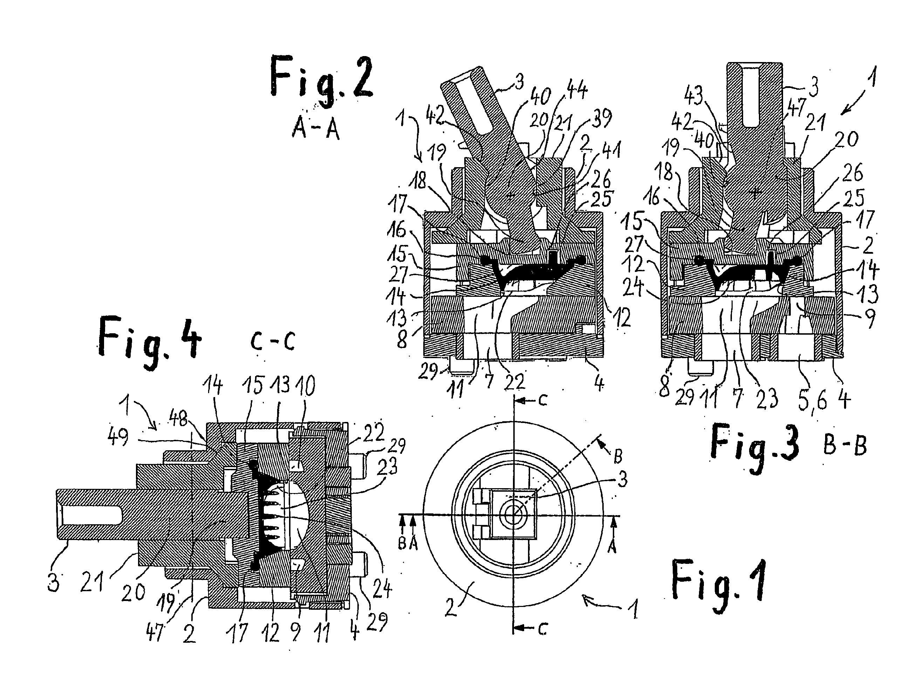

In Figur 1 ist eine Aufsicht auf die Kartusche 1 in Schließstellung dargestellt. Über das Gehäuse 2, aus dem der Stellhebel 3 zur Betätigung der Steuerscheibe herausragt, sind die Schnittlinien gelegt, unter denen die Schnitte durch die Kartusche verlaufen, die in den nachfolgenden Figuren dargestellt sind.

In Figur 2 ist eine Ansicht des Schnitts durch die Kartusche 1 entsprechend dem Verlauf A - A in symmetrischer Mischstellung, geöffnet, und in den Figuren 3 und 4 entsprechend den Verläufen B - B und C - C in Schließstellung dargestellt.

Das Gehäuse 2 wird auf der Unterseite durch eine Bodenplatte 4 mit den Anschlussöffnungen 5 und 6 für das kalte bzw. heiße Wasser und der Anschlussöffnung 7 für das abströmende Mischwasser abgeschlossen. Darüber liegt die Ventilsitzscheibe 8, von der die Einlassöffnungen 9 bzw. 10 und die Ausströmöffnung 11 mit den Öffnungen 5 bzw. 6 und 7 der Bodenplatte 4 korrespondierenden.

Der Schnitt A - A verläuft mittig durch die Ausströmöffnung 11. Der Schnitt B-B verläuft mittig durch die Einlassöffnung 10 und knickt im Mittelpunkt des Stellhebels 3 ab, um ab da mittig durch die Ausströmöffnung 11 zu verlaufen. Der Schnitt C - C verläuft senkrecht zum Schnittverlauf A - A, durch den Mittelpunkt des Stellhebels 3 in Schließstellung.

Über der Ventilsitzscheibe 8 liegt verschiebbar die Steuerscheibe 12. In Figur 2 ist sie in Öffnungsstellung, in den Figuren 3 und 4 in Schließstellung. Sie verschließt die Einlassöffnungen 9 und 10. Die Steuerscheibe 12 weist mittig einen kreisförmigen Durchbruch 13 auf, in den ein Körper 14 zur Verhinderung oder Dämpfung der Fließgeräusche eingesetzt ist. Im vorliegenden Ausführungsbeispiel besteht er aus einem Elastomer. Darüber liegt die Abdeckscheibe 15. Zur Abdichtung des Durchbruchs 13 überdeckt der Körper 14 die Steuerscheibe 12 mit einem ringförmigen Wulst 16 als Dichtelement, der in eine entsprechend geformte Nut 17 der Abdeckscheibe 15 gelagert ist.

In eine Nut oder Vertiefung 18 der Mitnehmer- oder Abdeckscheibe 15 greift der Mitnehmerzapfen 19 des Stellhebels 3 ein. Der Stellhebel 3 ist mit einem zylinderförmigen Schwenklager 20, dessen Schwenkachse 47 senkrecht zur Längsachse des Stellhebels 3 steht, ohne mechanische Schwenkachse, in einer Buchse 21 gelagert, die von dem Gehäuse 2 umschlossen wird.

Der Körper 14 zur Verhinderung oder Dämpfung der Fließgeräusche bildet zur Ventilsitzscheibe 8 eine hohlkugelförmige Überwölbung 22, eine Hohlkugel, der Mischkammer 23. Wie aus den Figuren ersichtlich, insbesondere aus Figur 4, sind in dieser Hohlkugel 22 parallel verlaufende Rippen 24 angeordnet. Hier ist der Abstand zwischen den äußeren Rippen kleiner als der Abstand der inneren Rippen voneinander. Der Körper 14 trägt auf seiner der Hohlkugel 22 abgewandten Seite einen Steg oder Zapfen 25, der zur Zentrierung in eine entsprechen geformte Nut oder Vertiefung 26 der Abdeckscheibe15 hineinreicht.

Oberhalb der Hohlkugel 22 des Körpers 14, zwischen der Abdeckscheibe 15 und dem Körper 14, hier im Bereich der Ausströmöffnung 11, ist im vorliegenden Ausführungsbeispiel ein Hohlraum 27 zu sehen, der ein Luftpolster enthält. Durch die Elastizität des Körpers 14 kann bei auftretenden Druckschwankungen der Körper 14 in diesen Raum 27 nachgeben und die auftretenden Druckstöße dämpfen.

Die Zapfen 29 dienen der Zentrierung und Befestigung in der Armatur.

Im vorliegenden Ausführungsbeispiel stützt sich die Buchse 21 mit dem in ihr gelagerten Stellhebel 3 auf einen konisch geformten Teil der Stirnwand 48 des zylindrisch geformten Gehäuses 2 mit einer ebenfalls konisch geformten Fläche 49 unter einem Winkel von 40 Grad ab (Bezugsziffem siehe Figur 4). Diese Fläche ist die Lagerfläche der Buchse 21 bei der Betätigung der Steuerscheibe 12 für die Mischung des Heiß- und Kaltwasserstroms. Zur Herabsetzung der Reibung können auf einer dieser Lagerflächen Fettkammern vorgesehen sein.

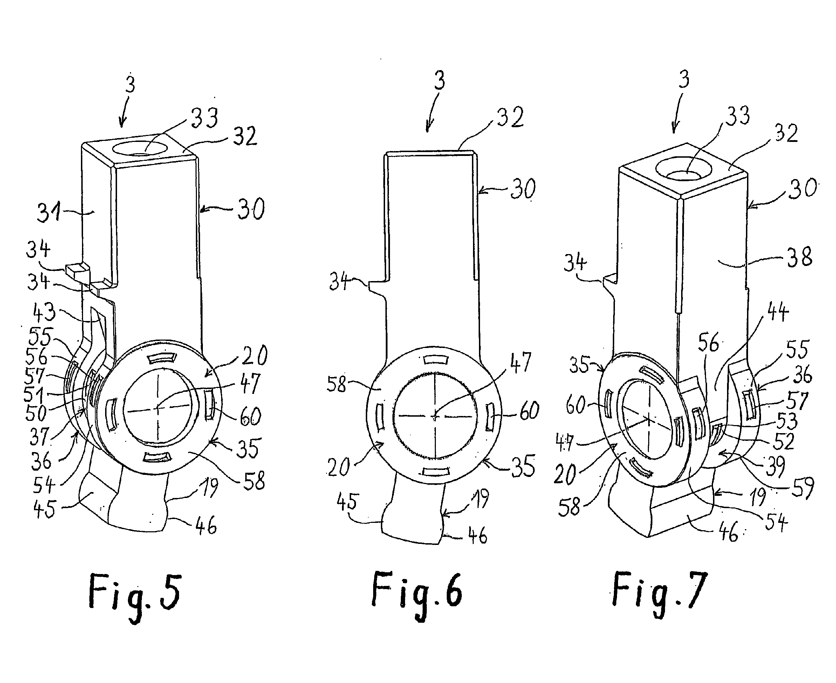

Die Figuren 5 bis 7 zeigen jeweils eine Ansicht des Stellhebels 3. Der Stellhebel setzt sich zusammen aus dem Hebelarm 30, an dem der Betätigungshebel der Armatur befestigt ist, dem zylinderförmigen Schwenklager 20 und dem daran angeformten Mitnehmerzapfen 19.

In Figur 5 ist die Rückseite 31 des Stellhebels 3, die dem Betätigenden der Armatur abgewandte Seite des Stellhebels 3, zu sehen. Es ist die Seite, die beim vollständigen Öffnen der Einlassöffnungen 9 und/oder 10 an der Buchse 21 anliegt. Der Hebelarm 30 hat auf seiner Oberseite 32 eine Gewindeöffnung 33 zur Befestigung des Betätigungshebels der Armatur, der sich auf die Ansätze 34 abstützt und durch sie zentriert wird.

Das Schwenklager 20 ist zylinderförmig und setzt sich zusammen aus zwei Scheiben 35 und 36 mit der Schwenkachse 47 als Mittelpunkt, die auf der Rückseite 31 des Stellhebels 3 durch eine Nut 37 und auf der Vorderseite 38, die dem Betätigenden zugewandte Seite, ebenfalls durch eine Nut 39 jeweils voneinander getrennt sind. Durch den Mitnehmerzapfen 19 sind die Nuten voneinander getrennt. Die Nuten 37 und 39 dienen der Zentrierung und Führung in der Buchse 21, die mittels eines Stegs 40 in die Nut 37 und mittels eines Stegs 41 in die Nut 39 eingreift, wie aus den Schnittbildern der Figuren 2 und 3 ersichtlich. Diese Steg- Nuten-Kombination ermöglicht einen lagerichtigen Zusammenbau von Stellhebel 3 und Buchse 21, die Führung des Stellhebels 3 bei der Schwenkbewegung zum Öffnen und Schließen der Einlassöffnungen 9 und/oder 10 und die Mitnahme der Buchse 21 bei der horizontalen Schwenkbewegung des Stellhebels 3 zur Betätigung der Steuerscheibe 12 zur Mischung der Warm- und Kaltwasserströme.

Zur Begrenzung der Schwenkbewegung des Stellhebels 3 zum Öffnen und Schließen der Einlassöffnungen 9 und/oder 10 um die Schwenkachse 47 hat die Buchse 21 auf dem Steg 40 eine Anschlagfläche 42, auf der in der Stellung der maximalen Öffnung der Einlassöffnungen 9 und/oder 10 sowie der Ausströmöffnung 11 der Stellhebel 3 mit der Fläche 43 der Nut 37 aufliegt, wie aus Figur 2 ersichtlich. In der Schließstellung liegt der Stellhebel 3 mit der Fläche 44 der Vorderseite 38 zwischen den Scheiben 35 und 36 in der vorderen Nut 39 an dem Steg 41 der Buchse 21 an.

Der stegförmige Mitnehmerzapfen 19 weist jeweils ballige Seitenflächen 45 bzw. 46 auf, mit denen er sich bei der Schwenkbewegung zum Öffnen und Schließen um die Schwenkachse 47 in der Nut oder Vertiefung 18 der Abdeckscheibe 15 abwälzen kann.

Zur Herabsetzung der Reibung an den Lagerflächen von Stellhebel 3 und Buchse 21 ist entweder auf den Lagerflächen der Buchse oder, wie hier dargestellt, auf den Lagerflächen des Stellhebels 3 mindestens eine Fettkammer vorgesehen. Auf der Lagerfläche 50 in der Nut 37 hinten ist mindestens eine Fettkammer 51 vorgesehen. Auf der Lagerfläche 52 in der Nut 39 vorne ist ebenfalls mindestens eine Fettkammer 53 vorgesehen. Weiterhin ist auf den Lagerflächen 54 und 55 der Scheiben 35 bzw. 36 des Schwenklagers 20 jeweils mindestens eine Fettkammer 56 bzw. 57 vorgesehen.

Auf der Stirnseite 58 der Scheibe 35 sowie auf der Stirnseite 59 der Scheibe 36 des Schwenklagers 20 können in gleichmäßigen Abständen auf dem Umfang verteilt ebenfalls Fettkammern 60 vorgesehen sein, wenn die Stirnseiten 58 und 59, wie in diesem Ausführungsbeispiel, flächig an der Buchse 21 anliegen. Die Fettkammern in dem vorliegenden Ausführungsbeispiel sind 5/10 mm tief, 1 mm breit und 3 mm lang.

## Patentansprüche

1. Kartusche (1) für eine Sanitärarmatur, wobei das Gehäuse (2) der Kartusche (1), das von einer Bodenplatte (4) verschlossen wird, umschließt: eine Ventilsitzscheibe (8) mit Einlassöffnungen (9, 10) für Kalt- und Heißwasser und eine Ausströmöffnung (11), die in den Ausfluss der Sanitärarmatur mündet, eine zur Ventilsitzscheibe (8) verschiebbar angeordnete Steuerscheibe (12), die eine Mischkammer (23) enthält, die die Einlassöffnungen (9, 10) und die Ausströmöffnung (11) der Ventilsitzscheibe (8) in Verbindung bringt und in der die Mischung des heißen mit dem kalten Wasser erfolgt, sowie eine Abdeckscheibe (15), die auf der der Ventilsitzscheibe (8) abgewandten Seite der Steuerscheibe (12) mit dieser verbunden ist und mit einem Stellhebel (3) zum Verschieben der Scheiben in Wirkverbindung steht, der mit dem Betätigungshebel der Armatur bewegt wird und in einer von dem Gehäuse (2) umschlossenen Buchse (21) gelagert ist, **dadurch gekennzeichnet, dass** der Stellhebel (3) ein zylinderförmiges Schwenklager (20) hat, mit dem er zum Öffnen und Schließen der Einlassöffnungen (9, 10) sowie der Ausströmöffnung (11) um eine nicht mechanische Schwenkachse (47) schwenkbar in der Buchse (21) gelagert ist, wobei der Stellhebel (3) in einer der Zylinderform des Schwenklagers (20) angepassten Ausnehmung der Buchse (21) ohne mechanische Schwenkachse gelagert ist und das zylinderförmige Schwenklager (20) aus zwei Scheiben (35, 36) besteht, wobei die nicht mechanische Schwenkachse (47) durch den Mittelpunkt der Scheiben verläuft.

2. Kartusche nach Anspruch 1, **dadurch gekennzeichnet, dass** die beiden Scheiben (35, 36) auf der Rückseite (31) des Stellhebels (3) durch eine hintere Nut (37) und auf der Vorderseite (38), die dem Betätigenden zugewandte Seite, durch eine vordere Nut (39) jeweils voneinander getrennt sind und dass in diese Nuten jeweils ein Steg (40, 41) der Buchse (21) zur Führung bei der vertikalen Schwenkbewegung des Stellhebels (3) eingreift.

3. Kartusche nach Anspruch 2, **dadurch gekennzeichnet, dass** bei der horizontalen Schwenkbewegung des Stellhebels (3) zum Öffnen und Schließen der Einlassöffnungen (9, 10) sowie der Ausströmöffnung (11) zur Mischung des Heiß- und des Kaltwasserstroms die Buchse (21) durch die Stege (40, 41) zwischen den zwei Scheiben (35, 36) des zylinderförmigen Schwenklagers (20) mit dem Stellhebel (3) in Wirkverbindung steht.

4. Kartusche nach Anspruch 2 oder 3, **dadurch gekennzeichnet, dass** die Stege (40, 41) der Buchse (21) zwischen den zwei Scheiben (35, 36) des Schwenklagers (20) die Anschläge für den Stellhebel (3) bei der Schwenkbewegung zum mit Öffnen und Schließen der Einlassöffnungen (9, 10) sowie der Ausströmöffnung (11) sind.

5. Kartusche nach Anspruch 4, **dadurch gekennzeichnet, dass** der Steg (40) der Buchse (21) eine Anschlagfläche (42) aufweist zur Begrenzung der Schwenkbewegung des Stellhebels (3) durch Anlage der Fläche (43) der hinteren Nut (37) beim Öffnen der Einlassöffnungen (9, 10) sowie der Ausströmöffnung (11).

6. Kartusche nach Anspruch 4, **dadurch gekennzeichnet, dass** in Schließstellung des Stellhebels (3) die Fläche (44) der Vorderseite (38) in der vorderen Nut (39) zwischen den Scheiben (35, 36) an dem Steg (41) der Buchse (21) anliegt.

7. Kartusche nach einem der Ansprüche 1 bis 6, **dadurch gekennzeichnet, dass** der Stellhebel (3) zum Verschieben und Verschwenken der Steuerscheibe (12) einen stegförmige Mitnehmerzapfen (19) aufweist, mit dem er über die Abdeckscheibe (15) mit der Steuerscheibe (12) in Wirkverbindung steht.

8. Kartusche nach Anspruch 7, **dadurch gekennzeichnet, dass** der stegförmig Mitnehmerzapfen (19) jeweils ballige Seitenflächen (45, 46) aufweist.

9. Kartusche nach einem der Ansprüche 1 bis 8, **dadurch gekennzeichnet, dass** der Stellhebel (3) von der Seite, wo die Abdeckscheibe (15) angeordnet ist, in die Buchse (21) einschiebbar ist und dass deren Stege (40, 41) die Führung zum lagerichtigen Einschieben und die Fixierung des Stellhebels (3) sind.

10. Kartusche nach einem der Ansprüche 1 bis 9, **dadurch gekennzeichnet, dass** die Lagerflächen (50, 52) in den Nuten (37, 39) und die Lagerflächen (54, 55) auf den Scheiben (35, 36) des in der Buchse (21) gelagerten Stellhebels (3), die konzentrisch zur Schwenkachse (47) angeordnet sind, Fettkammern (51, 53; 56, 57) aufweisen.

11. Kartusche nach einem der Ansprüche 1 bis 10, **dadurch gekennzeichnet, dass** der Stellhebel (3) an seinen Lagerflächen (58, 59) senkrecht zur Schwenkachse (47), auf den Scheiben (35, 36) des Schwenklagers (20), Fettkammern (60) aufweist.

12. Kartusche nach Anspruch 11, **dadurch gekennzeichnet, dass** die Fettkammern (60) konzentrisch um die Schwenkachse (47) angeordnet sind.

13. Kartusche nach einem der Ansprüche 1 bis 12, **dadurch gekennzeichnet, dass** die in dem Gehäuse (2) gelagerte Buchse (21) auf ihrer Lagerfläche (49) Fettkammern aufweist.

14. Kartusche nach einem der Ansprüche 1 bis 12, **dadurch gekennzeichnet, dass** das Gehäuse (2), in der die Buchse (21) mit dem in ihm gelagerten Stellhebel (3) gelagert ist, auf seiner Lagerfläche Fettkammern aufweist.

## Claims

1. A cartridge (1) for a sanitary fitting, wherein the housing (2) of the cartridge (1), which is closed by a base plate (4), encloses: a valve-seat disc (8) with inlet openings (9, 10) for cold and hot water and a discharge opening (11) which runs into the outflow of the sanitary fitting, a control disc (12) which is arranged so that it is displaceable with respect to the valve-seat disc (8) and contains a mixing chamber (23) that connects the inlet openings (9, 10) and the discharge opening (11) of the valve-seat disc (8) and in which the hot water is mixed with the cold water, and also a cover disc (15) which is connected to the control disc (12) on the side thereof that is remote from the valve-seat disc (8) and is operatively connected to a control lever (3) for displacing the discs, the control lever (3) being moved with the actuating lever of the fitting and being mounted in a bushing (21) enclosed by the housing (2), **characterised in that** the control lever (3) has a cylindrical swivel bearing (20) with which it is swivel-mounted about a non-mechanical swivel axis (47) in the bushing (21) to open and close the inlet openings (9, 10) and also the discharge opening (11), wherein the control lever (3) is mounted in a recess of the bushing (21) that is adapted to the cylinder shape of the swivel bearing (20) without a mechanical swivel axle, and the cylindrical swivel bearing (20) consists of two discs (35, 36), wherein the non-mechanical swivel axis (47) extends through the central point of the discs.

2. A cartridge according to claim 1, **characterised in that** the two discs (35, 36) are separated from each other in each case on the rear side (31) of the control lever (3) by a rear groove (37) and on the front side (38), the side facing the actuator, by a front groove (39), and **in that** a respective cross-piece (40, 41) of the bushing (21) engages into these grooves for guidance in the case of the vertical swivelling movement of the control lever (3).

3. A cartridge according to claim 2, **characterised in that** in the case of the horizontal swivelling movement of the control lever (3) for opening and closing the inlet openings (9, 10) and also the discharge opening (11) for mixing the hot- and the cold-water flow the bushing (21) is operatively connected to the control lever (3) by means of the cross-pieces (40, 41) between the two discs (35, 36) of the cylindrical swivel bearing (20).

4. A cartridge according to claim 2 or 3, **characterised in that** the cross-pieces (40, 41) of the bushing (21) between the two discs (35, 36) of the swivel bearing (20) are the stops for the control lever (3) in the case of the swivelling movement for opening and closing the inlet openings (9, 10) and also the discharge opening (11).

5. A cartridge according to claim 4, **characterised in that** the cross-piece (40) of the bushing (21) has a stop face (42) for limiting the swivelling movement of the control lever (3) by application against the face (43) of the rear groove (37) when opening the inlet openings (9, 10) and also the discharge opening (11).

6. A cartridge according to claim 4, **characterised in that** in the closed position of the control lever (3) the face (44) of the front side (38) rests against the cross-piece (41) of the bushing (21) in the front groove (39) between the discs (35, 36).

7. A cartridge according to one of claims 1 to 6, **characterised in that** the control lever (3) has for the displacement and swivelling of the control disc (12) a cross-piece-shaped carrier peg (19) by which it is operatively connected to the control disc (12) by way of the cover disc (15).

8. A cartridge according to claim 7, **characterised in that** the cross-piece-shaped carrier peg (19) has in each case convex side faces (45, 46).

9. A cartridge according to one of claims 1 to 8, **characterised in that** the control lever (3) can be inserted into the bushing (21) from the side where the cover disc (15) is arranged, and **in that** the cross-pieces (40, 41) of the bushing (21) constitute the guidance for the positionally correct insertion and the fixation of the control lever (3).

10. A cartridge according to one of claims 1 to 9, **characterised in that** the bearing faces (50, 52) in the grooves (37, 39) and the bearing faces (54, 55) on the discs (35, 36) of the control lever (3) mounted in the bushing (21) that are arranged concentrically to the swivel axis (47) have grease chambers (51, 53; 56, 57).

11. A cartridge according to one of claims 1 to 10, **characterised in that** the control lever (3) has grease chambers (60) on its bearing faces (58, 59) perpendicularly to the swivel axis (47), on the discs (35, 36) of the swivel bearing (20).

12. A cartridge according to claim 11, **characterised in that** the grease chambers (60) are arranged concentrically about the swivel axis (47).

13. A cartridge according to one of claims 1 to 12, **characterised in that** the bushing (21) that is mounted in the housing (2) has grease chambers on its bearing face (49).

14. A cartridge according to one of claims 1 to 12, **characterised in that** the housing (2), in which the bushing (21) is mounted with the control lever (3) mounted in it, has grease chambers on its bearing face.

## Revendications

1. Cartouche (1) pour un appareil de robinetterie sanitaire, dans laquelle le boîtier (2) de la cartouche (1), qui est fermé par une plaque de base (4), comprend :
un disque de siège de soupape (8) comportant des orifices d'admission (9, 10) pour l'eau froide et l'eau chaude, et un orifice d'évacuation (11) qui débouche dans la sortie de l'appareil de robinetterie sanitaire; un disque de commande (12) qui est disposé avec possibilité de déplacement par rapport au disque de siège de soupape (8) et contient une chambre de mélange (23) qui met en communication les orifices d'admission (9, 10) et l'orifice d'évacuation (11) du disque de siège de soupape (8),
et dans laquelle a lieu le mélange de l'eau chaude avec l'eau froide; ainsi qu'un disque de couverture (15) qui est relié au disque de commande (12), sur son côté éloigné du disque de siège de soupape (8), et est en liaison active avec un levier de manoeuvre (3) qui est destiné à déplacer les disques, est déplacé par la manette d'actionnement de l'appareil de robinetterie et est monté dans une douille (21) entourée par le boîtier (2), **caractérisée en ce que** le levier de manoeuvre (3) comporte une articulation pivotante (20) cylindrique, par laquelle il est monté dans la douille (21), avec possibilité de pivotement autour d'un axe de pivotement (47) non mécanique, en vue de l'ouverture et de la fermeture des orifices d'admission (9, 10) et de l'orifice d'évacuation (11), le levier de manoeuvre (3) étant monté, sans axe de pivotement mécanique, dans un évidement de la douille (21) qui est adapté à la forme cylindrique de l'articulation pivotante (20), et l'articulation pivotante (20) cylindrique étant constituée de deux disques (35, 36), sachant que l'axe de pivotement (47) non mécanique passe par le centre des disques.

2. Cartouche selon la revendication 1, **caractérisée en ce que** les deux disques (35, 36) sont séparés l'un de l'autre, sur la face arrière (31) du levier de manoeuvre (3), par une rainure arrière (37) et, sur la face avant (38) tournée vers l'utilisateur, par une rainure (39) avant, et **en ce qu'**une nervure (40, 41) de la douille (21) pénètre respectivement dans ces nervures, en vue du guidage lors du mouvement de pivotement vertical du levier de manoeuvre (3).

3. Cartouche selon la revendication 2, **caractérisée en ce que** lors du mouvement pivotant horizontal du levier de manoeuvre (3), en vue de l'ouverture et de la fermeture des orifices d'admission (9, 10) et de l'orifice d'évacuation (11) afin de mélanger le flux d'eau chaude et le flux d'eau froide, la douille (21) est en liaison active avec le levier de manoeuvre (3), du fait de l'engagement des nervures (40, 41) entre les deux disques (35, 36) de l'articulation pivotante (20) cylindrique.

4. Cartouche selon la revendication 2 ou 3, **caractérisée en ce que** les nervures (40, 41) de la douille (21), entre les deux disques (35, 36) de l'articulation pivotante (20), constituent les butées pour le levier de manoeuvre (3) lors du mouvement pivotant en vue de l'ouverture et de la fermeture des orifices d'admission (9, 10) et de l'orifice d'évacuation (11).

5. Cartouche selon la revendication 4, **caractérisée en ce que** la nervure (40) de la douille (21) présente une surface de butée (42) destinée à limiter le mouvement pivotant du levier de manoeuvre (3), du fait de l'appui de la surface (43) de la rainure arrière (37) lors de l'ouverture des orifices d'admission (9, 10) et de l'orifice d'évacuation (11).

6. Cartouche selon la revendication 4, **caractérisée en ce que** dans la position de fermeture du levier de manoeuvre (3), la surface (44) de la face avant (38) est en appui contre la nervure (41) de la douille (21), dans la rainure avant (39) entre les disques (35, 36).

7. Cartouche selon une des revendications 1 à 6, **caractérisée en ce que**, pour déplacer et faire pivoter le disque de commande (12), le levier de manoeuvre (3) présente un doigt d'entraînement (19) en forme de nervure, par lequel il est en liaison active avec le disque de commande (12), par l'intermédiaire du disque de couverture (15).

8. Cartouche selon la revendication 7, **caractérisée en ce que** le doigt d'entraînement (19) en forme de nervure présente respectivement des surfaces latérales (45, 46) bombées.

9. Cartouche selon une des revendications 1 à 8, **caractérisée en ce que** le levier de manoeuvre (3) peut être inséré dans la douille (21) depuis le côté sur lequel est disposé le disque de couverture (15), et **en ce que** les nervures (40, 41) de la douille forment le guide pour l'insertion du levier de manoeuvre (3) dans la position correcte et pour sa fixation.

10. Cartouche selon une des revendications 1 à 9, **caractérisée en ce que** les surfaces d'appui (50, 52) dans les rainures (37, 39) et les surfaces d'appui (54, 55) sur les disques (35, 36) du levier de manoeuvre (3) monté dans la douille (21), qui sont concentriques avec l'axe de pivotement (47), comportent des chambres de graissage (51, 53; 56, 57).

11. Cartouche selon une des revendications 1 à 10, **caractérisée en ce que** le levier de manoeuvre (3) présente des chambres de graissage (60) sur ses surfaces d'appui (58, 59) perpendiculaires à l'axe de pivotement (47), sur les disques (35, 36) de l'articulation pivotante (20).

12. Cartouche selon la revendication 11, **caractérisée en ce que** les chambres de graissage (60) sont disposées de façon concentrique autour de l'axe de pivotement (47).

13. Cartouche selon une des revendications 1 à 12, **caractérisée en ce que** la douille (21), qui est montée dans le boîtier (2), présente des chambres de graissage sur sa surface d'appui (49).

14. Cartouche selon une des revendications 1 à 12, **caractérisée en ce que** le boîtier (2), dans lequel la douille (21) est montée avec le levier de manoeuvre (3), inséré dans la douille, présente des chambres de graissage sur sa surface d'appui.
